# DEMANDE DE BREVET EUROPEEN

(11) **EP 1 431 600 A1**
(43) Date de publication de la demande: **23.06.2004**
(21) Numéro de dépôt: 02447262.3
(22) Date de dépôt: 20.12.2002
(51) Int. Cl.: F16C 27/04, F01D 25/16

(54) **Palier à roulement muni d'un "squeeze film" pour l'absorption de charge en cas de perte d'aube**

(71) Demandeur: Techspace Aero S.A., 4041 Herstal (BE)
(72) Inventeur: Pacchioni, Lorenzo, 4690 Roclenge (BE); Tran, Quac Hung, 4020 Liège (BE); Bos, Mathieu, 3520 Zonhoven (BE)
(74) Mandataire: Van Malderen, Michel

(57) **Abrégé**

La présente invention se rapporte à un palier à roulement pour le maintien d'une pièce de structure mobile interne (2) à symétrie de révolution, en rotation à l'intérieur d'une pièce de structure externe (1), elle-même fixe ou mobile, ledit palier comprenant :
- un ensemble de billes ou rouleaux (3) et un élément de jonction (4) assurant le contact mécanique entre les billes ou rouleaux (3) et la pièce de structure externe (1),
- un amortisseur à huile sous pression de type "squeeze film" (SQF) disposé au niveau d'une surface de contact annulaire de joint (5),
caractérisé en ce que la liaison fixe entre l'élément de jonction (4) et la pièce de structure externe (1) est assurée uniquement au moyen de ressorts de type Smalley® (12,12').

## Description

### Objet de l'invention

La présente invention se rapporte à un dispositif pour "squeeze film" ou amortisseur à huile sous pression, intégré dans un palier à roulement dépourvu de cage d'écureuil et destiné en particulier à être utilisé dans l'aéronautique civile.

L'invention concerne plus précisément le palier à roulement mettant en oeuvre le dispositif d'amortisseur.

### Arrière-plan technologique et état de la technique

Un palier à roulement, tel qu'existant par exemple dans un moteur d'avion, sert de lien entre un ou plusieurs éléments mobiles internes, présentant de préférence une symétrie de révolution et tournant autour d'un axe, et une structure externe. La structure externe peut être elle-même soit fixe soit mobile. Cette structure possède également la symétrie de révolution par rapport à l'axe de rotation de l' (des) élément(s) mobile(s). Elle peut par exemple avoir la forme d'un cône.

Le palier à roulement est essentiellement constitué de billes ou rouleaux se déplaçant sur des voies de roulement solidaires ou réalisées par des bagues, une bague interne et une bague externe.

En fonctionnement, des efforts sont transmis de l'élément mobile vers la structure externe, en particulier par l'intermédiaire de la bague externe de roulement, qui est directement reliée à la structure externe.

Afin de limiter l'effet de ces efforts, il est connu de confiner un film d'huile entre la bague externe du roulement et la pièce de structure externe. Ce film d'huile est communément appelé "squeeze film" (SQF).

L'huile présente à la surface de contact bague - structure externe est une huile sous pression, qui joue le rôle d'amortisseur.

La plupart des SQF connus sont étanchés au moyen de joints se présentant sous la forme de segments de type "piston". Ces joints sont placés dans deux gorges annulaires usinées dans la bague externe du roulement à sa surface de contact avec la structure externe. Le film d'huile est dès lors plus particulièrement confiné dans l'espace délimité par ces deux gorges annulaires (fuite d'huile limitée et calibrée).

Le montage de ces segments dans leur bague de roulement est particulièrement difficile à réaliser. Pour des raisons d'accès malaisé, il nécessite un outillage très délicat. De plus, ce montage présente un risque de casse non négligeable, vu que l'outillage porte sur une très petite surface de ces segments, généralement en fonte.

De plus, les vibrations communiquées au roulement mettent le film d'huile sous forte pression, principalement au niveau des segments susmentionnés.

Toujours selon l'art antérieur, la bague externe du roulement est fixée habituellement à la structure externe par un dispositif à tiges appelé "cage d'écureuil". Alors que le SQF confère une fonction d'amortisseur au niveau du roulement, la cage d'écureuil permet de reprendre la flexion par vibration. Différentes contraintes de réalisation imposent un coût de réalisation élevé à la solution classique à cage d'écureuil.

De plus, lors de la mise en charge du roulement par vibration, les surfaces de contact respectives de la bague interne et de la bague externe ne peuvent rester constamment parallèles sous l'effet des efforts de flexion axiaux et radiaux. Il s'ensuit l'apparition d'un cône et de pics de pression au niveau de l'interface des bagues.

Enfin, dans la solution classique, en cas de perte d'aube par rupture, la transmission de la charge au support de palier est réalisée via une vis fusible située sur la cage d'écureuil ou sur le support de palier et permettant de découpler le système rotorique du système fixe. Le système fusible permet une diminution significative de la charge transmise au support et à l'aile de l'avion. Le risque de perte de moteur, déséquilibre ou d'arrachage d'aile est ainsi réduite.

De plus, le système à vis fusible requiert le respect de tolérances de fabrication très précises, si on veut en garantir l'efficacité, ce qui augmente encore le coût lié à l'utilisation d'une cage d'écureuil.

### Buts de l'invention

La présente invention vise à fournir une solution qui ne présente pas les inconvénients de l'état de la technique.

La présente invention a en particulier pour but de fournir des supports de palier capables d'amortir les charges générées lors de perte d'aubes, sans devoir recourir à l'installation d'éléments de découplage dits "fusibles".

L'invention a également pour but de fournir une solution significativement meilleur marché que celles connues de l'état de la technique et simple de réalisation.

### Principaux éléments caractéristiques de l'invention

La présente invention se rapporte à un palier à roulement pour le maintien d'une pièce de structure mobile interne à symétrie de révolution, en rotation à l'intérieur d'une pièce de structure externe, elle-même fixe ou mobile, ledit palier comprenant :
- un ensemble de billes ou rouleaux et un élément de jonction assurant le contact mécanique entre les billes ou les rouleaux et la pièce de structure externe,
- un amortisseur à huile sous pression de type "squeeze film" (SQF) disposé au niveau d'une surface de contact annulaire de joint entre l'élément de jonction et la pièce de structure externe,
- au moins deux joints d'étanchéité élastiques annulaires disposés chacun dans une gorge usinée dans l'élément de jonction, aux bords latéraux de ladite surface de contact annulaire.

Le palier à roulement de l'invention est caractérisé en ce que la liaison fixe entre l'élément de jonction et la pièce de structure externe est assurée uniquement au moyen de ressorts ou rondelles élastiques, par exemple de type Smalley®, de rondelles coniques de type Belleville ou d'éléments déformables assurant la même fonction.

Cette caractéristique de l'invention permet de s'affranchir de l'utilisation classique d'une liaison fixe par bâtonnets, encore appelée cage d'écureuil. Ainsi, l'utilisation de ressorts Smalley® permet de garder constamment parallèles les deux surfaces cylindriques du joint, lors de mise en charge ou de vibrations, ce qui assure une efficacité contrôlée. Dans ce cas précis, la raideur de la cage d'écureuil provoque un effet de cône affectant ce parallélisme. De plus, les ressorts Smalley® assurent la raideur axiale et permettent le respect du point fixe du roulement à billes. Ils absorbent les vibration et charge axiales, tandis que les vibration et charge radiales sont absorbées par le SQF et par la souplesse des ressorts Smalley®. Enfin, l'utilisation de ressorts Smalley® entraîne la suppression de l'élément fusible présent sur cage d'écureuil, précisément destiné à l'amortissement de la charge créée par la perte d'aubes, par exemple lors d'une ingestion d'oiseaux par le moteur aéronautique. On constate, grâce à l'invention, une nette réduction des charges transmises dans l'étage basse pression.

Avantageusement, le palier à roulement selon l'invention présente à la surface de contact de joint une rainure annulaire située juste avant chaque gorge, du côté interne de ladite surface. Ce type de rainure permet la décharge des pics de pression au niveau des gorges et partant la réduction du risque de contact au niveau du SQF.

De préférence, la largeur et la profondeur de ladite rainure sont respectivement inférieures à la largeur et la profondeur de ladite gorge.

Toujours selon l'invention, le palier à roulement est pourvu d'un dispositif anti-rotation empêchant la rotation de l'élément de jonction autour de la pièce de structure externe.

Ce dispositif anti-rotation comprend de préférence une pluralité de tenons usinés dans une face radiale interne de la pièce de structure externe en contact avec une face radiale de l'élément de jonction, dans laquelle sont usinés des évidements correspondants.

De manière particulièrement avantageuse, les joints d'étanchéité élastiques annulaires disposés dans leurs gorges respectives pour le calibrage des fuites d'huile sont des joints polymères, et plus particulièrement élastomères, de type O-ring. Des joints de type segments métalliques, connus dans l'état de la technique, peuvent être également utilisés à cet effet.

Un autre aspect de la présente invention concerne un élément de jonction d'un palier à roulement tel que décrit ci-dessus, caractérisé en ce qu'il comprend la bague extérieure de roulement et en ce qu'il présente à la surface de contact de joint à amortisseur d'huile une rainure annulaire située juste avant chaque gorge, du côté interne de ladite surface.

### Brève description des figures

La figure 1 représente une vue en coupe, selon un plan axial, d'un palier à roulement étanché par "squeeze film", selon l'état de la technique.

La figure 2 représente une vue en coupe, selon un plan axial, d'un palier à roulement étanché par SQF, selon l'invention.

### Description d'une forme d'exécution suivant l'état de la technique

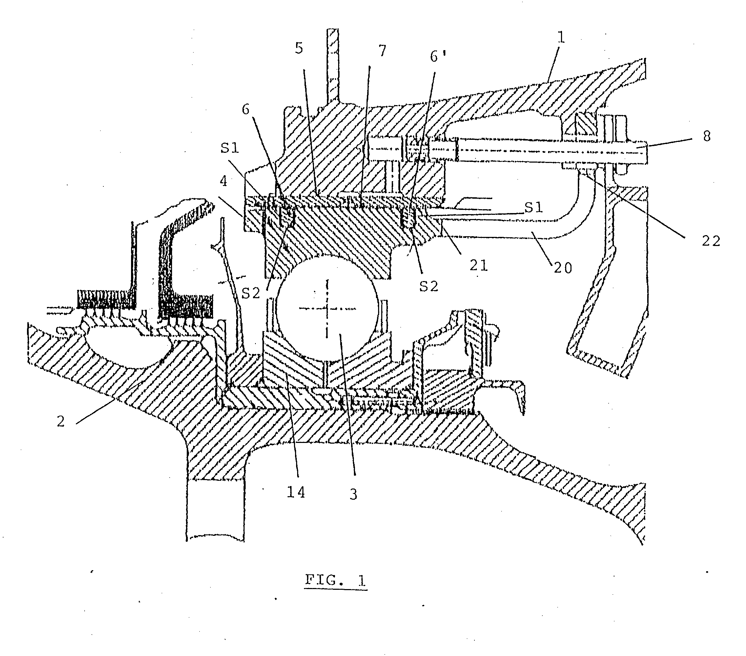

La figure 1 donne un exemple de palier à roulement utilisant un SQF selon l'état de la technique, dans le cas particulier d'un moteur aéronautique. Le palier assure le lien entre une structure fixe conique, le support de palier 1, disposée autour d'un élément mobile tournant 2, par exemple un arbre moteur dans ce cas-ci, au moyen d'un ou plusieurs roulements à billes ou à rouleaux 3. Le palier possède une symétrie de révolution autour de l'axe de l'arbre moteur. Le roulement est donc constitué d'un ensemble de billes ou rouleaux 3 disposés de manière circulaire entre les deux bagues externe 4 et interne 14. Les billes 3 sont mises en contact avec la structure fixe 1 via la bague externe de roulement 4, la surface de contact 5 entre la bague externe 4 et la structure 1 étant annulaire. Deux gorges 6 et 6' sont usinées sur cette bague 4 aux extrémités de la surface de contact annulaire 5. Un joint métallique torique, de type segment de piston, est déposé dans chaque gorge. L'huile sous pression constitutive du SQF est injectée au niveau de cette surface de contact 5, entre les deux gorges 6 et 6' au niveau d'un orifice 7 par exemple au moyen d'une canalisation 8. La pression d'huile qui s'exerce sur le joint assure l'étanchéité par l'augmentation de la surface de contact entre le joint et deux surfaces perpendiculaires S1 et S2 des gorges, les forces de pression étant à la fois radiales et axiales.

En outre, en vue d'assurer la rétention axiale de ladite bague externe de roulement 4 et son centrage, on dispose une cage métallique, appelée communément "cage d'écureuil", essentiellement constituée de tiges boulonnées 20 qui permettent un lien entre ladite bague externe 4 à l'une des extrémités 21 tandis que l'autre extrémité 22 est boulonnée sur la partie externe (fixe) 1, éventuellement via un système de vis fusible en vue de conserver l'intégrité du moteur en cas de perte d'aube (non représenté).

La Demanderesse a déjà déposé des demandes de brevet visant à améliorer les paliers à roulement munis de SQF de l'état de la technique (voir demandes publiées EP-A-1 170 520 et US-A-2002/0067871).

### Description d'une forme d'exécution préférée de l'invention

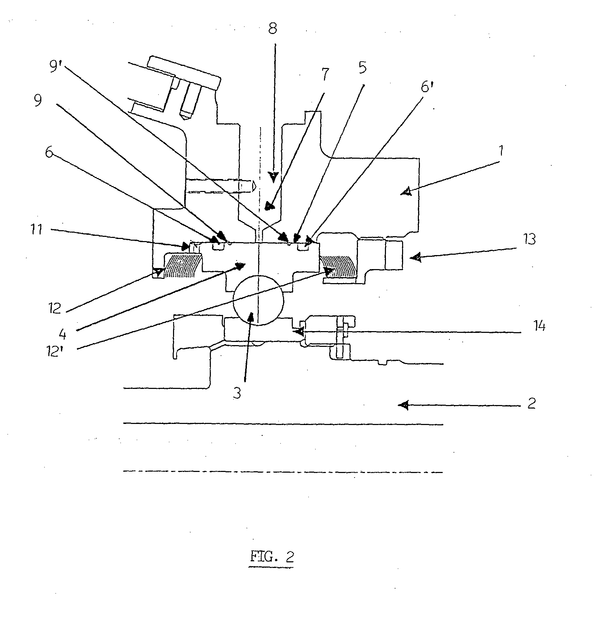

Une forme d'exécution préférée de l'invention présentée à la figure 2 propose des améliorations pour les paliers à SQF de l'état de la technique.

La principale amélioration, réalisant le caractère innovant de l'invention, consiste en la suppression de la liaison fixe par cage d'écureuil de la bague extérieur de roulement 4. Les poussées de type axial et le point fixe du moteur sont dès lors assurés au moyen d'une liaison par ressorts (ou rondelles élastiques) de type Smalley® 12,12' montés de chaque côté de la bague 4. L'un des ressorts est monté par contact avec l'écrou de fixation 13 du roulement. En outre, il convient d'ajouter un dispositif anti-rotation 11 de roulement. Celui-ci s'obtient par usinage d'une pluralité d'ergots (en nombre égal à 3 ou 4) dans le support de palier, qui viennent se loger dans des évidements correspondants de la bague externe 4 de roulement (non représentés).

L'avantage d'une telle configuration par rapport au dispositif à cage d'écureuil apparaît lors de la présence de vibrations. L'usage de ressorts permet de conserver les deux surfaces de joint en contact parfaitement parallèles, en évitant de la sorte d'importants pics de pression. En cas de perte d'aube, des charges axiales vers l'avant et/ou vers l'arrière sont appliquées au palier. Ces charges sont remarquablement bien absorbées par le dispositif à ressorts Smalley® de l'invention (compression et amorti). Les ressorts peuvent être dimensionnés pour absorber la charge de manière telle que l'intégrité du moteur soit conservée. Celui-ci va donc garder une certaine poussée, ce qui constitue un avantage par rapport au système classique à cage d'écureuil avec découplage fusible, où le moteur est nécessairement arrêté. Les ressorts Smalley® sont de réalisation et montage simples, donc bon marché. Enfin, la souplesse radiale des ressorts permet, par l'absence d'usure, de supprimer le "coating plasma" sur la surface d'étanchéité radiale du support de palier. Il suffit d'ajuster en jouant sur la souplesse et le serrage des ressorts.

En outre, on décrira ci-après des améliorations secondaires pour les paliers à SQF, qui viennent avantageusement compléter l'invention.

D'abord, on remplace les segments métalliques de l'état de la technique par des joints circulaires en polymère de type O-ring. Les pressions au niveau du SQF au niveau des segments peuvent en effet être très élevées et le joint d'huile par conséquent très rigide. Cela augmente le risque de transmission à la partie fixe du palier d'une charge anormale telle que celle résultant de la perte d'aube. Par leur souplesse, les joints O-ring peuvent plus facilement laisser passer axialement la fuite d'huile vers l'extérieur (pression transformée en énergie cinétique du film d'huile). De plus, les joints O-ring sont faciles à dimensionner, extrêmement bon marché et de montage aisé.

Les joints O-ring sont spécifiés pour des températures allant jusqu'à 250 °C, voire 350 °C. On peut les utiliser dans les enceintes de palier à condition de limiter la température de telles enceintes à 200°C environ.

Une autre amélioration proposée est la réalisation, au niveau de la surface de contact 5 de la bague externe avec le support de palier 1, d'une rainure 9,9' située juste avant chacune des gorges 6,6' susmentionnées. La finalité de ces rainures 9,9' est de réduire les pics de pression présents au niveau desdites gorges 6,6' et qui sont dus aux vibrations de l'ensemble. La présence de ces rainures permet avantageusement de ménager les O-rings et de limiter l'échauffement par vibration.

## Revendications

1. Palier à roulement pour le maintien d'une pièce de structure mobile interne (2) à symétrie de révolution, en rotation à l'intérieur d'une pièce de structure externe (1), elle-même fixe ou mobile, ledit palier comprenant :
- un ensemble de billes ou rouleaux (3) et un élément de jonction (4) assurant le contact mécanique entre les billes ou rouleaux (3) et la pièce de structure externe (1),
- un amortisseur à huile sous pression de type "squeeze film" (SQF) disposé au niveau d'une surface de contact annulaire de joint (5) entre l'élément de jonction (4) et la pièce de structure externe (1),
- au moins deux joints d'étanchéité élastiques annulaires disposés chacun dans une gorge (6,6') usinée dans l'élément de jonction (4), aux bords latéraux de ladite surface de contact annulaire (5),
ledit palier à roulement étant **caractérisé en ce que** la liaison fixe entre l'élément de jonction (4) et la pièce de structure externe (1) est assurée uniquement au moyen de ressorts de type Smalley® (12,12'), de rondelles coniques de type Belleville ou d'éléments déformables assurant la même fonction.

2. Palier à roulement selon la revendication 1, **caractérisé en ce que** l'élément de jonction (4) présente, à la surface de contact de joint (5), une rainure annulaire (9,9') située juste avant chaque gorge (6,6'), du côté interne de ladite surface (5).

3. Palier à roulement selon la revendication 2, **caractérisé en ce que** la largeur et la profondeur de ladite rainure (9,9') sont respectivement inférieures à la largeur et la profondeur de ladite gorge (6,6').

4. Palier à roulement selon l'une quelconque des revendications précédentes, **caractérisé en ce qu'**il est pourvu d'un dispositif anti-rotation (11) empêchant la rotation de l'élément de jonction (4) autour de la pièce de structure externe (1).

5. Palier à roulement selon la revendication 4, **caractérisé en ce que** le dispositif anti-rotation (11) comprend une pluralité de tenons usinés dans une face radiale interne de la pièce de structure externe (1) en contact avec une face radiale de l'élément de jonction (4), dans laquelle sont usinés des évidements correspondants.

6. Palier à roulement selon l'une quelconque des revendications 1 à 5, **caractérisé en ce que** les joints d'étanchéité élastiques annulaires disposés dans leurs gorges respectives (6,6') sont des joints polymères de type O-ring.

7. Palier à roulement selon l'une quelconque des revendications 1 à 5, **caractérisé en ce que** les joints d'étanchéité élastiques annulaires disposés dans leurs gorges respectives (6,6') sont des joints à segments métalliques.

8. Elément de jonction (4) d'un palier à roulement selon l'une quelconque des revendications précédentes, **caractérisé en ce qu'**il comprend la bague extérieure de roulement et **en ce qu'**il présente à la surface de contact de joint à amortisseur d'huile (5) une rainure annulaire (9,9') située juste avant chaque gorge (6,6'), du côté interne de ladite surface (5).
